# FASCICULE DE BREVET EUROPEEN

(11) **EP 1 759 880 B1**
(45) Date de publication et mention de la délivrance du brevet: **23.11.2011**
(21) Numéro de dépôt: 06015863.1
(22) Date de dépôt: 31.07.2006
(51) Int. Cl.: B60B 5/02, B60B 21/06, B60B 1/04

(54) **Roue à rayons en tension**
Rad mit Speichen unter Spannung
Wheel with tension spokes

(30) Priorité: 31.08.2005 FR 0508914
(43) Date de publication de la demande: 07.03.2007
(73) Titulaire: MAVIC S.A.S., 74370 Metz-Tessy (FR)
(72) Inventeur: Mercat, Jean-Pierre, 74650 Chavanod (FR); Righini, Claude, 74290 Veyrier du Lac (FR); Saillet, Benoît, 73410 Albens (FR)

(56) Documents cités:
- EP-B1- 0 494 277
- WO-A-91/13771
- FR-A- 2 792 250
- US-A- 5 104 199

## Description

L'invention concerne une roue à rayons en tension pour un vélo et notamment une roue dont la jante et les rayons sont en matière composite.

Le document FR 2 792 250 décrit une roue dont la jante et les rayons sont en matériau métallique, chaque rayon étant équipé de moyens individuels de tension.

De façon connue, l'utilisation d'une matière composite pour réaliser des composants de vélo permet de gagner du poids par rapport au métal. D'une part une matière composite telle que des fibres de carbone a un module spécifique et une résistance spécifique qui sont plus élevés qu'un métal, tel que l'aluminium pour les jantes ou l'inox pour les rayons. En outre une matière composite a une meilleure résistance à la fatigue que le métal.

Ainsi il est connu de réaliser une jante pour roue de vélo en matière composite. Les demandes de brevet FR2460195, FR2672251, FR2713543, EP1231077 décrivent de telles jantes. Pour réaliser le caisson de la jante il est proposé tantôt un noyau sur lequel on dispose les nappes de composite enduites de résine, tantôt une vessie gonflable que l'on dispose à l'intérieur du moule et que l'on gonfle.

On connaît également des rayons réalisés en matière composite, les demandes de brevet W09113771, FR2784622, US6036281, décrivent de tels rayons.

Pour ce qui concerne les roues complètes réalisées en matière composite, la demande de brevet FR2701899 décrit une roue à bâtons qui est réalisée par moulage.

Selon le brevet US5104199, la roue est réalisée à partir de deux moitiés de roue. Chacune des moitiés comprend une portion de jante et une nappe de rayons avec une portion centrale d'assemblage sur le moyeu. Ces éléments sont réalisés d'un seul tenant. A l'assemblage les deux moitiés de roue sont jointes, et les portions centrales des rayons sont montées sur un corps de moyeu où elles sont maintenues écartées à l'aide de deux rondelles élastiques de blocage qui sont engagées dans une gorge. L'écartement des rondelles permet de mettre les rayons sous tension, ce qui donne à la roue sa rigidité.

Dans le même ordre d'idées le brevet US5707114 en relation avec la figure 24 propose de forcer l'écartement des portions centrales pour permettre l'engagement d'une entretoise tubulaire au centre de la roue.

Egalement le brevet US4844552 décrit une roue dont la tension des rayons est ajustée en forçant les deux flasques d'accrochage de rayons à s'écarter l'un de l'autre au niveau du moyeu.

Ces modes de constructions sont avantageux car les roues obtenues sont très légères du fait de l'absence de pièces qui permettent d'ajuster la tension des rayons. Cependant pour une roue arrière il est difficile de cette manière d'atteindre une tension élevée dans les rayons. En effet à cause de la présence de la roue libre la portion centrale de la nappe de rayon située du côté de la roue libre est rapprochée par rapport au plan médian de la roue, si bien qu'on a peu de course de déplacement de la portion pour réaliser la tension des rayons.

Ce problème n'existe pas seulement pour une roue en matière composite, de façon générale il se pose pour toute roue dont les rayons sont dépourvus de moyens individuels de réglage de tension du côté de la roue libre au moins et pour laquelle la tension des rayons est ajustée en écartant l'une de l'autre les deux nappes au niveau du moyeu.

Compte tenu de cet art antérieur il existe un besoin pour une roue qui permette d'atteindre une tension plus élevée de rayons.

La roue à rayons en tension de l'invention comprend une jante, des rayons et un moyeu central, la jante ayant sur l'extérieur un canal de réception du pneu qui définit un plan médian et sur l'intérieur des zones d'accrochage pour les rayons qui définissent un plan médian d'accrochage des rayons, le moyeu ayant un plan médian et deux flasques d'accrochage des rayons, un des flasques étant plus rapproché du plan médian du moyeu que l'autre, et au moins les rayons qui sont accrochés au flasque plus rapproché du plan médian du moyeu étant dépourvus de moyens individuels de mise sous tension, et où lesdits rayons qui sont accrochés au flasque plus rapproché du plan médian du moyeu sont accrochés à la jante sur le côté du plan médian du canal de réception du pneumatique qui est opposé audit flasque rapproché.

L'invention sera mieux comprise en se référant à la description ci-dessous et aux dessins qui lui sont attachés.
La figure 1 est une vue générale d'une roue.
La figure 2 montre en section la jante de la roue de la figure 1.
La figure 3 représente la roue avant mise sous tension des rayons.
La figure 4 montre la roue de la figure 4 après mise sous tension des rayons.

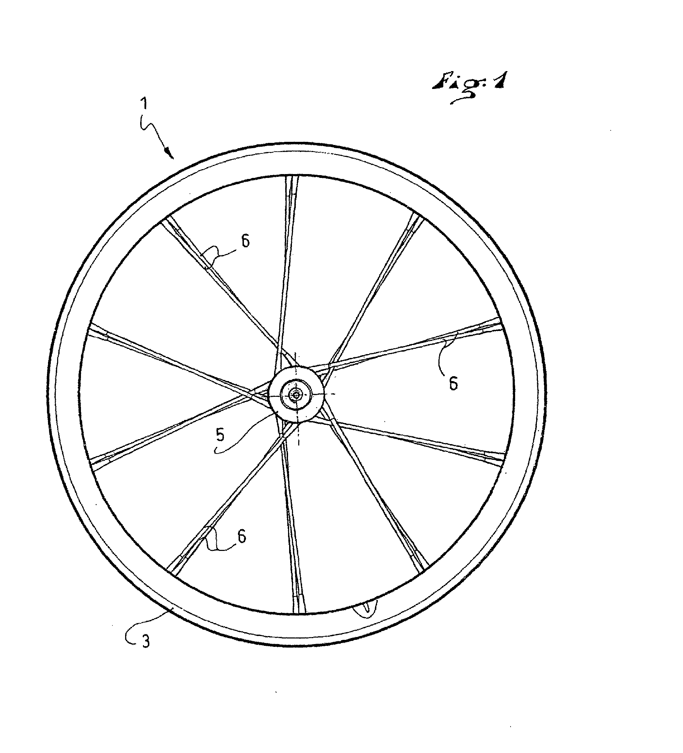

La figure 1 représente en vue de côté une roue 1. De façon classique la roue comprend une jante périphérique 3, un moyeu central 5 et des rayons de liaison 6 entre la jante et le moyeu. La roue qui est représentée est une roue arrière, toutefois ceci n'est pas limitatif et l'invention s'applique également à une roue avant.

La roue représentée comprend vingt rayons répartis en deux nappes de dix rayons chacune. Le nombre de rayons n'est pas non plus limitatif vis-à-vis de l'invention.

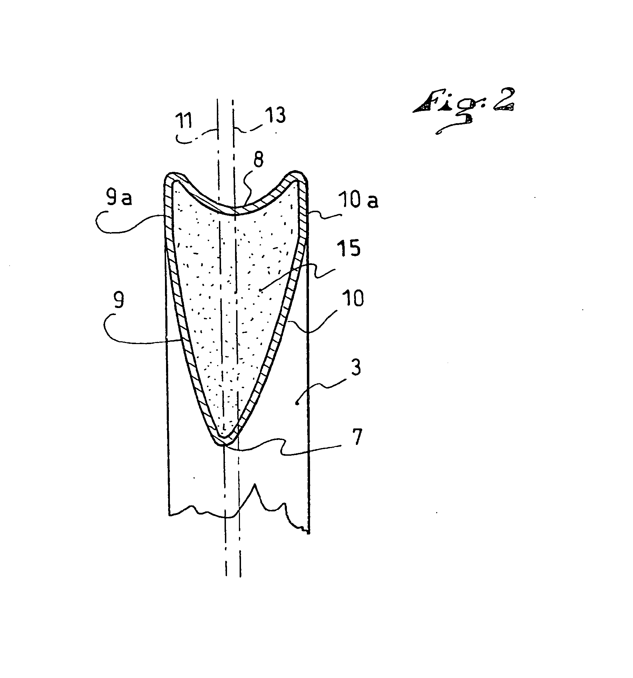

La jante 3 est représentée en section en figure 2. Comme on peut le voir dans cette figure la jante a une section effilée une hauteur de section dans le plan de la figure 2 de l'ordre du double de la largeur. De façon classique la jante comprend une base 7, un pont supérieur 8 et des parois 9 et 10 de liaison. Les parties supérieures de ces parois sont parallèles et fournissent deux surfaces de freinage 9a et 10a.

La jante représentée est prévue pour recevoir un boyau. A cet effet elle présente sur l'extérieur un canal de réception du pneumatique. Ce n'est pas limitatif et la jante pourrait avoir dans sa partie supérieure un canal de réception du pneu formé par le prolongement des parois de liaison. Le canal de réception du pneu ou de pneumatique définit un plan médian que l'on a schématisé par le trait mixte 13.

La jante représentée dans la figure 2 a une section asymétrique, c'est-à-dire que la base 7 est déportée axialement par rapport au plan médian 13. Le déport d'asymétrie a une valeur comprise entre 0,5 et 4 millimètres, de préférence il est de l'ordre de 3 millimètres. L'effet de cette asymétrie sur la tension des rayons sera expliqué ultérieurement.

La jante 3 est réalisée en matière composite, par exemple en fibres de carbone noyées dans une matrice de résine époxy ou polyester. La jante pourrait également être réalisée en métal, notamment en alliage d'aluminium.

Tout mode de fabrication approprié convient pour réaliser la jante 3. Par exemple la paroi de la jante est formée sur un noyau 15 en matériau léger. Il s'agit par exemple d'une mousse acrylique qui a été préparée par usinage ou par cintrage à chaud. La paroi de la jante comprend plusieurs nappes de fibres de carbone qui sont imprégnées de résine. On peut utiliser des nappes qui sont pré-imprégnées de résine ou procéder par voie humide c'est-à-dire imprégner les nappes de résine après leur mise en place autour du noyau. L'ensemble est placé ensuite dans une moule de cuisson pour réaliser la cuisson de la résine.

D'autres modes de construction pourraient aussi convenir.

De façon connue le moyeu 5 comprend un corps de moyeu 18 qui présente une portion tubulaire 18a à laquelle les rayons sont reliés et un embout prévu pour le montage du mécanisme de roue libre. Ce mécanisme est de tout type approprié et ne sera pas décrit en détails.

Les rayons 6 sont répartis en deux nappes de rayons, une nappe de rayons 20 située du côté de la roue libre et une nappe de rayons 22 située du côté opposé à la roue libre. Les rayons sont accrochés à la jante 3 à une extrémité. Par exemple ils sont collés à l'aide de colle époxy ou autre, contre les parois 9 et 10 dans des zones d'accrochage de rayons. Ces zones d'accrochage des rayons 20 et 22 définissent un plan médian d'accrochage de rayons que l'on a schématisé par le trait mixte 11. Pour la jante représentée la partie extrême de la base, c'est-à-dire sa partie de plus petite largeur, est située dans ce plan médian 11 d'accrochage des rayons.

A l'autre extrémité les rayons sont accrochés à un flasque 21 pour la nappe de rayons du côté de la roue libre et un flasque 23 pour l'autre nappe.

Les rayons sont très rigides en traction et ils sont dépourvus de moyens individuels de mise en tension au moins pour les rayons qui sont situés du côté de la roue libre, c'est-à-dire pour la nappe la plus aplatie. Par exemple ils sont réalisés en matière composite, notamment en fibres de carbone noyées dans une matrice de résine époxy. La rigidité en traction est voisine de 4000 Nm pour ce matériau. D'autres matériaux peuvent aussi convenir.

Pour l'assemblage de la roue, par exemple les deux flasques sont montés de façon mobile le long de la portion tubulaire 18a du corps du moyeu. La mise sous tension des rayons est réalisée en écartant les deux flasques l'un de l'autre et en les maintenant écartés sur le corps de moyeu par tout moyen approprié, par exemple de la colle, une entretoise ou des anneaux élastiques engagés dans une gorge de la portion tubulaire 18a. Du fait de la rigidité en traction des rayons la tension dans les rayons s'élève rapidement dès que les flasques sont écartés.

La tension dans les rayons varie avec le carré de la distance entre le flasque d'accrochage et le plan médian d'accrochage. Il est donc important de pouvoir écarter le plus possible les deux flasques l'un de l'autre.

Ainsi, selon le mode de réalisation illustré les rayons sont accrochés aux deux flasques 21 et 23. Les deux flasques sont engagés le long de la portion tubulaire 18a et ils sont écartés l'un de l'autre. Une fois écartés à la distance voulue ils sont collés au corps de moyeu avec de la colle époxy. On pourrait utiliser d'autres techniques d'assemblage de la roue et de mise sous tension des rayons, notamment celles décrites dans les brevets cités pour illustrer l'état de la technique.

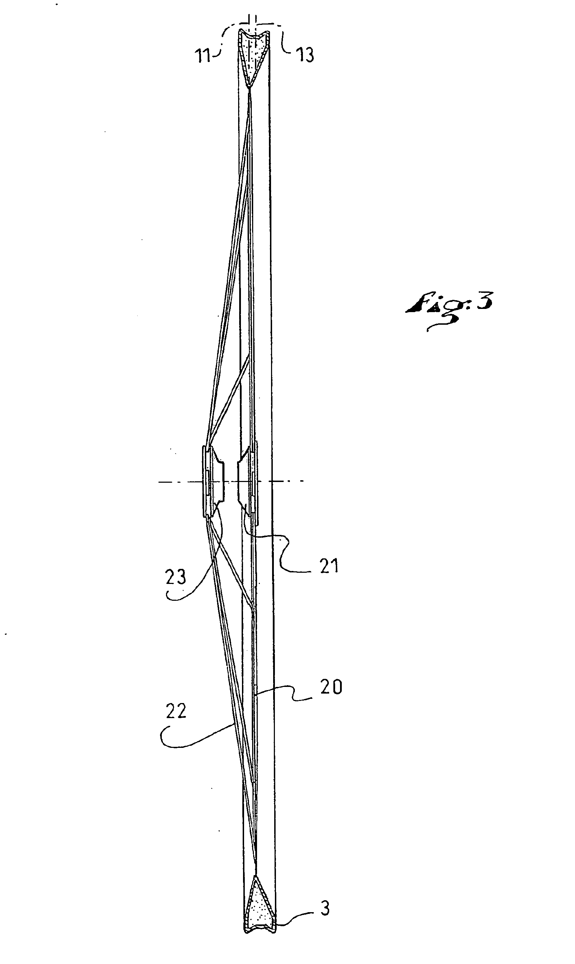

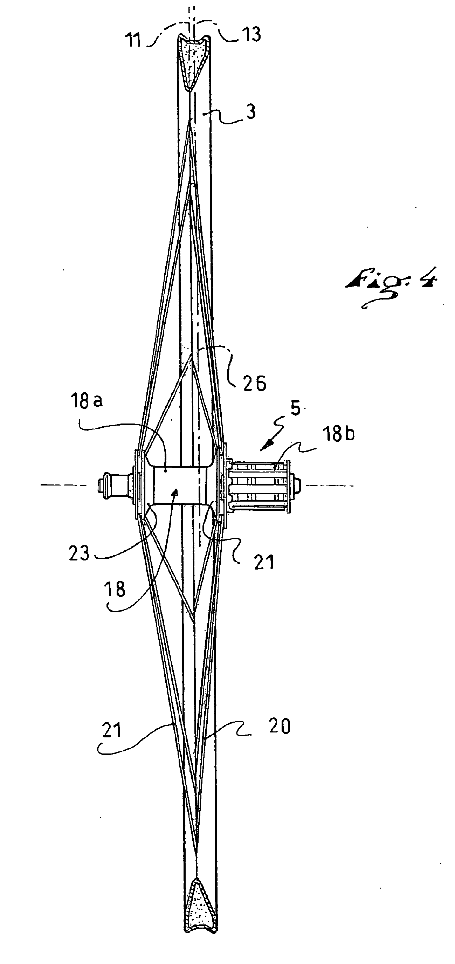

La figure 3 montre les nappes de rayons à l'état détendu et la figure 4 les nappes de rayons à l'état tendu. Dans la figure 4 on a représenté par le trait mixte 26 le plan médian du moyeu. On peut voir dans cette figure que le flasque 21 de la nappe la plus aplatie est plus rapproché de ce plan 26 que l'autre flasque 23.

Lorsque les rayons sont sous tension, le plan médian 13 de la jante coïncide avec le plan médian 26 du moyeu ainsi que le montre la figure 4.

A titre indicatif la largeur du moyeu complet est usuellement de 130 millimètres pour une roue de route. Du fait de la présence de la roue libre, le flasque d'accrochage des rayons qui se trouve du côté de la roue libre se trouve à une distance de 48 millimètres environ de l'extrémité du moyeu ce qui le place à une distance de 17 millimètres environ du plan médian du moyeu. On nommera cette distance le déport du flasque côté roue libre. On peut difficilement augmenter cette distance compte tenu de l'encombrement de la roue libre. Cet encombrement est lié au nombre de pignons et en règle générale il est le même pour toutes les roues arrière.

Du côté opposé à la roue libre, le flasque peut occuper une position sur la portion tubulaire du corps de moyeu qui le place à environ 43 millimètres du plan médian du moyeu, une fois les rayons tendus.

La différence entre ces distances induit également une différence dans les angles que les angles d'ouverture des parapluies qui sont formés par les nappes de rayons. C'est-à-dire que la nappe de rayon du côté de la roue libre est plus aplatie que l'autre. Egalement les rayons de la nappe située du côté de la roue libre sont plus courts que les rayons de l'autre nappe, et une fois tendus les rayons de la nappe du côté de la roue libre sont soumis à une tension plus élevée que les rayons de l'autre nappe. La jante est maintenue en équilibre entre les deux flasques par la tension des rayons des deux nappes.

La jante 3 étant asymétrique en section, le plan médian 13 de la jante est décalé en direction de la roue libre par rapport au plan médian 11 d'accrochage des rayons et les rayons qui sont accrochés au flasque 21 situé du côté de la roue libre sont accrochés à la jante sur le côté du plan médian 13 qui est opposé à la roue libre. Ainsi, si on suppose qu'à l'état détendu des rayons la nappe des rayons 20 est plane, ce qui est le cas le plus favorable pour obtenir une tension élevée dans les rayons, le plan médian de la jante se trouve à une distance égale à la somme du déport du flasque côté roue libre et du déport d'asymétrie de la jante. Pour amener le plan médian 13 de la jante en coïncidence avec le plan médian 26 du moyeu, il faudra écarter l'un de l'autre les flasques 23 et 21 pour déplacer la jante d'une distance égale à la somme des déports. C'est ce déplacement qui génère une tension dans les rayons et qui donne à la roue sa rigidité.

Par rapport à une jante symétrique, on accroît la distance de déplacement axial de la jante, ce qui induit une tension additionnelle dans les rayons. On constate qu'un déport d'asymétrie de 3 millimètres induit une augmentation de tension dans les rayons de 43% du côté de la roue libre et de 70% du côté opposé par rapport à une jante symétrique. L'augmentation de la tension des rayons du côté opposé à la roue libre évite que les rayons de ce côté se détendent en utilisation.

La distance additionnelle de déplacement de la jante est obtenue par un écartement additionnel du flasque 23 le long de la portion tubulaire 18a du corps de moyeu. Dans le cas où l'écartement est obtenu au moyen d'une entretoise on prévoit une entretoise plus longue. D'autres moyens peuvent aussi convenir comme un raccourcissement des rayons, notamment des rayons 22 de la nappe qui est située du côté opposé à la roue libre.

On peut aussi accrocher les rayons 20 de la nappe la plus aplatie située du côté de la roue libre à la paroi 9 de la jante située du côté opposé à la roue libre par rapport au plan médian 13 du canal de réception du pneu. Ceci contribue à déporter la jante du côté de la nappe la plus aplatie en l'absence de tension dans les rayons.

Naturellement la description n'est pas limitée au mode de réalisation qui vient d'être décrit et on pourrait adopter d'autres mises en oeuvre de l'invention sans pour autant sortir du cadre de celle-ci.

En particulier l'invention n'est pas limitée au mode de construction de la roue qui a été décrit. Notamment on pourrait réaliser la roue en deux moitiés, chacune comprenant une demie jante et les rayons, puis procéder à l'assemblage des deux moitiés et à l'accrochage des rayons sur le moyeu. En outre l'invention n'est pas limitée à une roue en matière composite. Elle s'applique également à des roues dont la jante et/ou les rayons sont métalliques et de façon générale à toute roue à rayons en traction, dont les rayons sont dépourvus de moyens individuels de mise en tension au moins pour les rayons de la nappe la plus aplatie et dont la tension dans les rayons est ajustée par écartement relatif des moyens d'accrochage des rayons au moyeu.

L'invention n'est pas limitée à une jante ayant une base et un pont sur l'extérieur. Elle couvre également les jantes qui auraient un ou plusieurs ponts additionnels entre la base et le pont extérieur.

L'invention n'est pas non plus limitée à une roue arrière, elle s'applique également à une roue avant et de façon générale à toute roue ayant deux nappes de rayons qui forment des parapluies non symétriques, l'une des nappes étant plus rapprochée du plan médian du moyeu que l'autre. Cela peut être notamment une roue prévue pour un frein à disque. Pour une telle roue, une des nappes de rayons est aplatie pour dégager de l'espace à une extrémité du moyeu afin de permettre le montage du disque.

Les flasques pour l'accrochage des rayons au moyeu doivent être compris de façon générale comme tout moyen permettant d'accrocher les rayons au moyeu, comme par exemple des bulbes dans le cas d'un moyeu à bulbes ou même des créneaux pour un moyeu à créneaux.

## Revendications

1. Roue à rayons en tension comprenant une jante (3), des rayons (6, 20, 22) et un moyeu central (5), la jante ayant sur l'extérieur un canal de réception du pneu qui définit un plan médian (13) et sur l'intérieur des zones d'accrochage pour les rayons qui définissent un plan médian (11) d'accrochage des rayons, le moyeu (5) ayant un plan médian (26) et deux flasques d'accrochage des rayons (21, 23), un des flasques (21) étant plus rapproché du plan médian (26) du moyeu que l'autre, les rayons (20) étant accrochés au flasque (21) plus rapproché du plan médian du moyeu sont accrochés à la jante (3) sur le côté du plan médian (13) du canal de réception du pneumatique qui est opposé audit flasque rapproché (21), **caractérisée par le fait qu'**au moins les rayons (20) qui sont accrochés au flasque (21) plus rapproché du plan médian (26) du moyeu sont dépourvus de moyens individuels de mise sous tension

2. Roue selon la revendication 1, **caractérisée par le fait que** la jante (3) est asymétrique en section et que le plan médian (13) du canal de réception du pneumatique est déporté par rapport au plan médian d'accrochage des rayons vers le flasque (21) le plus proche du plan médian (26) du moyeu (5).

3. Roue selon la revendication 2, **caractérisée par le fait que** le plan médian (13) de canal de réception du pneumatique est décalé par rapport au plan médian d'accrochage des rayons d'une distance comprise entre 0,5 et 4 millimètres.

4. Roue selon la revendication 3, **caractérisée par le fait que** le plan médian (13) de canal de réception du pneumatique est décalé par rapport au plan médian d'accrochage des rayons d'une distance de 3 millimètres.

5. Roue selon la revendication 1, **caractérisée par le fait que** la jante (3) et les rayons (6, 20, 22) sont réalisés en matière composite.

6. Roue selon la revendication 1, **caractérisée par le fait qu'**au moins un des flasques d'accrochage de rayons (23) est assemblé au moyeu par de la colle.

7. Roue selon la revendication 1, **caractérisé par le fait que** les flasques sont écartés l'un de l'autre par une entretoise.

## Claims

1. Tensioned spoke wheel comprising a rim (3), spokes (6, 20, 22) and a central hub (5), the rim externally having a tire receiving channel defining a median plane (13), and internally having spoke fastening zones defining a median plane (11) for fastening the spokes, the hub (5) having a median plane (26) and two flanges (21, 23) for fastening the spokes, one (21) of the flanges being closer to the median plane (26) of the hub than the other, the spokes (20) fastened to the flange (21) closer to the median plane of the hub are fastened to the rim (3) on the side of the median plane (13) of the pneumatic tire receiving channel that is opposite said closer flange (21), **characterized in that** at least the spokes (20) fastened to the flange (21) closer to the hub median plane (26) are devoid of individual tensioning means.

2. Wheel according to claim 1, **characterized in that** the rim (3) is asymmetrical in cross-section, and that the median plane (13) of the pneumatic tire receiving channel is offset, with respect to the spoke fastening median plane, toward the flange (21) that is the closest to the median plane (26) of the hub (5).

3. Wheel according to claim 2, **characterized in that** the median plane (13) of the pneumatic tire receiving channel is offset, with respect to the spoke fastening median plane, by a distance between 0.5 and 4 millimeters.

4. Wheel according to claim 3, **characterized in that** the median plane (13) of the pneumatic tire receiving channel is offset, with respect to the spoke fastening median plane, by a distance of 3 millimeters.

5. Wheel according to claim 1, **characterized in that** the rim (3) and the spokes (6, 20, 22) are made of a composite material.

6. Wheel according to claim 1, **characterized in that** at least one (23) of the flanges for fastening the spokes is assembled to the hub using glue.

7. Wheel according to claim 1, **characterized in that** the flanges are spaced apart by a spacer.

## Patentansprüche

1. Rad mit Speichen unter Spannung, umfassend eine Felge (3), Speichen (6, 20, 22) und eine zentrale Nabe (5), wobei die Felge auf ihrer Außenseite einen Aufnahmekanal für einen Reifen aufweist, der eine Medianebene (13) definiert, und auf ihrer Innenseite Befestigungsbereiche für die Speichen aufweist, die eine Medianebene (11) zur Befestigung der Speichen definieren, wobei die Nabe (5) eine Medianebene (26) und zwei Befestigungsflansche für Speichen (21, 23) aufweist, und wobei einer der Flansche (21) näher an der Medianebene (26) der Nabe ist als der andere, wobei die Speichen (20), die an dem Flansch (21) befestigt sind, der näher an der Medianebene der Nabe liegt, an der Felge (3) an der Seite der Medianebene (13) des Aufnahmekanals für den Reifen befestigt sind, der dem näheren Flansch (21) gegenüberliegt, **dadurch gekennzeichnet, dass** zumindest die Speichen (20), die an dem Flansch (21) befestigt sind, der näher an der Medianebene (26) der Nabe liegt, ohne einzelne Mittel zum Unterspannungsetzen vorgesehen sind.

2. Rad nach Anspruch 1, **dadurch gekennzeichnet, dass** die Felge (3) im Querschnitt asymmetrisch ist und **dadurch**, dass die Medianebene (13) des Aufnahmekanals des Reifens in Bezug auf die Befestigungsmedianebene der Speichen zum Flansch (21), der der Medianebene (26) der Nabe (5) am nächsten liegt, versetzt ist.

3. Rad nach Anspruch 2, **dadurch gekennzeichnet, dass** die Medianebene (13) des Aufnahmekanals des Reifens in Bezug auf die Befestigungsmedianebene der Speichen um einen Abstand zwischen 0,5 und 4 mm versetzt ist.

4. Rad nach Anspruch 3, **dadurch gekennzeichnet, dass** die Medianebene (13) des Aufnahmekanals des Reifens in Bezug auf die Befestigungsmedianebene der Speichen um einen Abstand von 3 mm versetzt ist.

5. Rad nach Anspruch 1, **dadurch gekennzeichnet, dass** die Felge (3) und die Speichen (6, 20, 22) aus einem Verbundmaterial bestehen.

6. Rad nach Anspruch 1, **dadurch gekennzeichnet, dass** zumindest einer der Befestigungsflansche der Speichen (23) durch Klebstoff mit der Nabe verbunden ist.

7. Rad nach Anspruch 1, **dadurch gekennzeichnet, dass** die Flansche voneinander durch einen Abstandshalter auseinandergespreizt sind.
